(19) Europäisches Patentamt
European Patent Office
Office européen des brevets

(11) **EP 2 903 387 A1**

(12) **EUROPEAN PATENT APPLICATION**

(43) Date of publication:
05.08.2015 Bulletin 2015/32

(51) Int Cl.:
*H04W 76/02* (2009.01)
*H04W 48/18* (2009.01)
*H04W 88/06* (2009.01)
*H04W 4/02* (2009.01)
*H04W 72/02* (2009.01)

(21) Application number: 14153506.2

(22) Date of filing: 31.01.2014

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME

(71) Applicant: Vodafone GmbH
40549 Düsseldorf (DE)

(72) Inventors:
• Lindner, Mirko
40547 Düsseldorf (DE)
• Hammer, Dr., Günther
90429 Nürnberg (DE)

(74) Representative: Müller & Schubert
Patentanwälte
Innere Wiener Straße 13
81667 München (DE)

(54) **Method, mobile device, computer readable medium and computer program product for establishing a communication connection in a communication network.**

(57) The present invention relates to a method of establishing a communication connection from a mobile device in a communication network. The method is defined in that before establishing the communication connection a decision on a Call Type to be used for the communication connection is made, wherein the decision is at least partially made on the mobile device wherein the Call Type comprises the bearer type and the radio access technology to be used for the communication connection, wherein the decision is made based on at least one parameter and wherein at least one of the parameters relates to the user behaviour. Furthermore a mobile device, a computer readable medium for a mobile device and a computer program product with a computer readable medium that can be read on a mobile device are described.

Fig. 1

**Description**

The present invention relates to a method of establishing a communication connection in a communication network, to a mobile device, a computer readable medium and to a computer program product.

Due to the recent advances in Radio Access Technologies (RAT) and different bearer types used, there are more and more ways available to connect two or more parties, in particular their mobile devices, in a communication thread. However, these technologies are not fully integrated, which results in a disjoint experience especially when voice, video or general data streams are involved. The problems arise as soon as either party starts moving and thus switches from one access technology to another which also may require a change of the bearer types.

Typical examples of issues with mobility user experience are:

- If a voice call is initiated on WiFi (Wireless Fidelity) as a SIP call (Session Initiation Protocol), it would disconnect as soon as the user leaves the coverage area of the WiFi network.
- If a call begins as a Voice over LTE call (VoLTE), mobility into 3G or 2G Radio Access Technologies can be supported but due to the change of bearer type (from packet switched (PS) to circuit switched (CS)), certain call features and services are disconnected or at least interrupted after the handover.
- Best effort bearer Voice over IP calls (BE VoIP) can maintain call features and services also between some Radio Access Technologies (RAT) (for example between Long Term Evolution (LTE) and Universal Mobile

Telecommunications System (UMTS)) but the call will disconnect every time the user moves into Global System for Mobile Communications (GSM) coverage. Best effort bearers also have the disadvantage that there is no guaranteed minimum bit rate per connection and in congested networks the user experience may degrade up to and including dropped calls or call set up failures.

In US 2012/0322446 A1 a method and apparatus for radio access technology search is described. In this approach, user equipment utilizing a first radio access technology (RAT) in a first cell will search for service coverage by a second RAT in one or more neighbouring cells, will identify such a second cell and will evaluate criteria for cell re-selection from the second cell to the first cell. While a continuous switching between cells can be avoided with this approach and the RAT of higher priority may be selected, the approach does not offer any solution for providing optimal user experience with respect to both, call continuity and service, in particular call features.

The problem underlying the present invention is thus to provide a solution for offering an increased user experience with respect to both, call continuity and service features.

The present invention is based on the finding that this problem can be solved by considering the user behaviour when setting up a communication connection and selecting the appropriate connection for the communication connection.

According to a first aspect, the present invention thus relates to a method of establishing a communication connection in a communication network from a mobile device. The method is characterized in that before establishing the communication connection a decision on a Call Type to be used for the communication connection is made, wherein the decision is at least partially made on the mobile device, wherein the Call Type comprises the bearer type and the radio access technology to be used for the communication connection and wherein the decision is made based on at least one parameter and wherein at least one of the parameters relates to the user behaviour.

The communication network according to the present invention is in particular a mobile communication network comprising at least one radio access network (RAN). The communication network further comprises a mobile core network to which access is obtained via the at least one RAN. Preferably, at least two different types of RAN are present in the communication network. The different types of RAN may use different types of radio access technologies (RATs). The present invention is in particular advantageous as it allows addressing the problem of handling the presence of different types of RAT. Accordingly, the present invention is preferably used in cases where two different RATs would be available for a communication connection. The communication connection to be established according to the present invention is preferably a connection for transmission of at least audio signals. The mobile device may also be referred to as user equipment (UE) or mobile terminal. The mobile device may in particular be a mobile phone or other terminal capable of communicating via the communication network.

According to the present invention, at least part of the decision on a Call Type to be used for the communication connection is made on the mobile device. This decision is made before establishing the communication connection. By making this decision prior to the establishment of the communication connection, it can be achieved that the appropriate Call Type is used for establishment of the communication and will preferably be maintained throughout the duration of the communication connection and no change of Call Type during the duration of the communication connection is necessary. If the actual situation deviates from the parameters used for the decision and for example an inter-RAT handover becomes necessary, such a handover will of course be performed. That means, that the Call Type which was decided to be used for the communication connection will be maintained until the actual situation requires a different RAT and/or bearer type.

The decision according to the present invention is at least partially made on the mobile device. The decision making, which may also be referred to as the deciding process, comprises several steps. In particular, the deciding process may include the determining of parameters, in particular of conditions, the processing of parameters, in particular comparing of parameters and/or stored, data such as threshold values, to other parameters and/or stored data, the combining of parameters, the selection of a Call Type as well as the triggering of establishment of the communication connection with the selected Call Type. The selected Call Type may also be referred to as the Call Type which has been decided.

The Call Type according to the present invention comprises the bearer type and the radio access technology (RAT) to be used to establish the communication connection.

According to the present invention, a Call Type is being decided or selected. A Call Type according to the present invention is a combination of at least a RAT and bearer type. Bearer types are in particular circuit switched bearer (CS bearer) or packet switched bearer (PS bearer). In some RATs two different bearers may exist whereas other RATs may only have one bearer. Therefore, in some RAT there may be a selection of the bearer, whereas others have one specific bearer assigned to it. With respect to availability of different RATs two scenarios may exist.

> i) only wireless wide area network (WWAN) is available, which is typically public land mobile network (PLMN) of the 2G and/or 3G and/or 4G kind
> ii) wireless wide area network (WWAN) and wireless local area network (WLAN) are available, that means an additional coverage of typically an IEEE 802.11 network exists.

For the purpose of the present invention the bearer types are described in particular with respect to circuit switched (CS) bearer and packet switched (PS) bearer. Within the CS and PS domain, however, further bearer types may be distinguished in the protocol layer.

According to the present invention, the decision on the Call Type is made based on at least one parameter relating to the user behaviour. By considering the user behaviour in making the decision on the Call Type to be used, the user experience may be improved. In particular, a Call Type suitable for the respective user and his behaviour can be selected.

A parameter according to the present invention is any data or value, that influences the decision. Parameters may be used directly for the step of selecting the Call Type or the parameter may be processed before being considered in the decision making or deciding process, in particular in the step of selecting the Call Type.

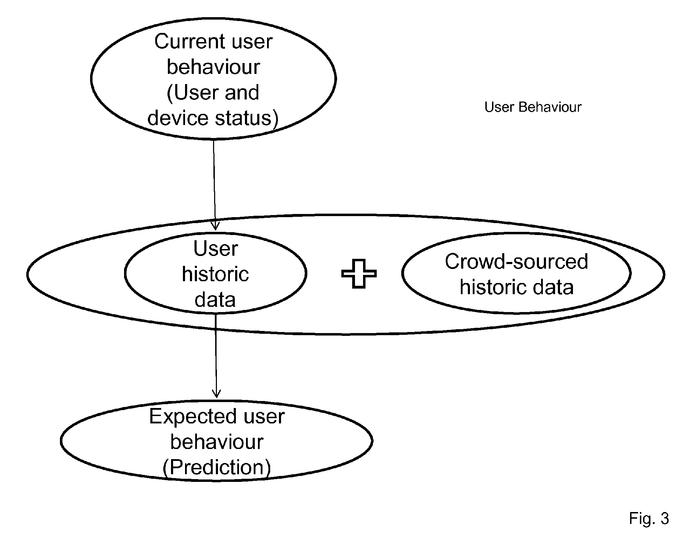

The decision may be based on more than one parameter. At least one of the parameters is a parameter relating to the user behaviour. Parameters relating to the user behaviour may comprise conditions and/or information on the user behaviour which is schematically depicted in Figure 3. The conditions may for example comprise the velocity at which the user moves or the time of day at which the user want to establish the communication connection. The information on the user behaviour may in particular comprise the current user situation, historic data on the user behaviour and expected user behaviour. The current user situation may comprise conditions of the user as well as of the device, i.e. the user status and the device status. The current user situation may also be referred to as a situation fingerprint. Historic data on the user behaviour may also comprise conditions of the user as well as from the device which were present in the past. The historic data on the user behaviour may also comprise data on other users which are different from the user who currently tries to establish a communication connection. This data may also be referred to as crowd-sourced user data. This crowd sourced data may also comprise conditions such as user status and device status. The expected user behaviour may be a prediction which is made on the basis of the current user situation and historic user data. The expected user behaviour will therefore hereinafter also be referred to as a prediction. For making a prediction on the user behaviour and considering crowd sourced data, the current user behaviour may be compared to entries of other users and a similar situation may be identified in the crowd-sourced historic data.

With the method according to the present invention a number of advantages can be achieved. As not only a RAT is selected as suggested in the prior art, but a Call Type which also included at least the bearer type, both, the necessity of mobility and the necessity of feature support can be addressed. As furthermore the decision is made by considering the user behaviour, the appropriate combination of RAT and bearer type for the user can be made rather then merely selecting the RAT with the highest priority (2G-3G-4G) as suggested in the prior art.

According to a preferred embodiment, the Call Type comprises a service to be rendered. Services according to the present invention define the features of the communication connection which is to be established. The service in particular defines the characteristics or criteria of a call to be established. The service may for example be a feature call or a mobility call. Wherein a feature call is an audio call with additional features such as video features or for example additional services/features as described in the RCS (Rich Communication Services) standard. A mobility call is a call with maximum continuity during movement of the mobile device.

By deciding on a Call Type which includes the service to be rendered, needs of the user can be addressed directly. For example, the need for continuity during a call can be addressed. These needs of the user can be considered in the decision making by determining requirements of the user with respect to mobility and feature richness of the call which is to be established. As the decision on the service to be rendered is made together with the decision on the RAT and bearer type, the optimal combination of mobility and feature richness can be provided. As furthermore, the decision is based on the user behaviour, the appropriate service for the user can be selected.

According to a preferred embodiment of the invention, at least one of the parameters to be used for making the decision on the Call Type to be used is a prediction, preferably derived based on user history data. The prediction is preferably a prediction of the user behaviour. In addition, the prediction may be the prediction of requirements for the communication connection, for example the required mobility and the feature richness of the call to be established.

In this embodiment, not only the history of the user behaviour can be considered but the expected user behaviour in the future, in particular during the duration of the communication connection, can be considered when deciding on the Call Type to be used. The prediction of the user behaviour may be made based on historic user data, which is also referred to hereinafter as user history data. The prediction may for example relate to the movement of the user during the communication connection as well as to the duration of the communication connection and/or to the expected necessity of call features during the communication connection.

By determining or establishing a prediction, the likelihood of call handovers to become necessary during the expected duration of the communication connection as well as the preference of the user to accept dropped calls for the benefit of a feature rich call can be estimated. Hence, the decision on the Call Type to be used for the communication connection, which is to be set up, can be made based on the requirements of the user with respect to the call criteria that the user will expect from the communication connection and will thus result in a better user experience.

According to the present invention, the call criteria, which the user will most likely want for the communication connection, can be determined as requirements for the communication connection. In particular, the requirements such as mobility and feature richness of a call that the user will expect, can be determined. These requirements will be determined based on the prediction of the user behaviour which is established. This prediction is preferably based on user history data. From the user history data, which may be stored at the mobile device, it will for example be possible to determine that the user in general has long calls with a party at a certain time of the day and during that time does not move. With such user history data it will be possible to make the prediction that a communication connection which is set up during this time of the day, will most likely last a longer period of time and no handovers are required. Hence, the requirement of mobility is low, whereas the requirement of feature richness may be high. With this information the appropriate Call Type, preferably including the service to be rendered and thus the respective call criteria for the communication may be selected.

According to one embodiment, hence one parameter which is for the decision is a requirement for mobility of the communication connection and/or and a requirement for features in the communication connection. These parameters which may also be referred to as requirements are preferably derived from the at least one other parameter. In particular, the requirements may be deduced from the prediction on user behaviour, as explained above. It should be noted that the requirements refer to the need or expected need by the user for call criteria. The features in the communication connection are preferably the features of a call and may for example be video features or other data stream features.

The establishment of the prediction is preferably based on a decision algorithm which may use all or some of the following data for the calculation:

- current data on user behaviour determined by measuring
- data on user behaviour (from the user or from a different user) stored in a data base locally or in a remote data base
- current system data / network data determined by measuring
- system data / network data stored in a data base

Preferably, the Call Type is selected based on at least two parameters. Only one of the parameters has to be indicative of the user behaviour, whereas the at least one additional parameter may for example relate to the current situation, the device or the network. For example the availability of RAT(s) may be used as a parameter for determining the Call Type. In a preferred embodiment, at least one feature is indicative of the mobility of the user. According to the present invention the mechanism carrying out the method of the present invention, in particular making the decision on the Call Type, preferably derives the most suitable Call Type by considering parameters representing for example the device status, the situational context, user data and/or user behaviour.

The device status may be for example represented by a parameter such as the available RAT for the mobile device or whether a connection has already been established by the mobile device. By considering a parameter indicating whether a connection has already been established, for example cases, where the user has initiated a communication connection for downloading data before trying to establish a communication connection, in particular a call, may be addressed. In particular, in such cases, the Call Type should be selected to allow the communication connection for the download to be maintained, that means to not interrupt the download. The situational context may be for example represented by a parameter such as the time of day or current location. The user data may be for example represented by parameters such as contact data. The user behaviour may be for example represented by parameters such as duration of previous communication connections, travel habits of the user or call feature usage by the user.

According to a preferred embodiment, at least one of the parameters comprises a condition indicative of the available radio access technologies. The condition may indicate the number of available radio access technologies and/or the type of available radio access technologies. By considering this parameter when selecting a Call Type, the ability of the mobile device to use the selected RAT can be ensured. According to the present invention the parameters may comprise one or more of the following parameters. Parameters may be conditions indicative of the available radio access network(s), service features, time, location, velocity of the user, service duration, contact, available data rates, operator policies and/or any combination of such indications. In addition or alternatively, the parameters may comprise information indicative of the user behaviour, in particular the current user situation, information indicative of the previous user behaviour, in particular as historic data of the user behaviour, or information indicative of expected user behaviour, in particular as predictions of user behaviour, and/or information on the behaviour of other users of the communication connection.

The parameter or condition indicative of the available radio access network(s) may be the RAT number and/or type. This parameter may be determined by device measurements with and without network support to determine RF signal strength. In addition, RAT changes / bearer changes, which are expected during the communication connection, in particular during the call can be used as a parameter. This information may be obtained based on history of the user, which may be stored as history data on the mobile device or on a remote entity, such as a network based or Internet based server.

Parameters indicative of service features may be the typical call features used by the user with the contact. This information may be obtained from user history data. Also the typical call features used during last calls of the user may be used as a parameter indicative of the service features. Also this information may be obtained from user history data. In addition or alternatively, typical call features used per location may be used as parameter indicative of the service features. Finally, typical call features used per time of day may be used as parameter indicative of the service features.

Examples of parameters indicative of time may be the time of the day, the information whether it is a weekday, weekend or a public holiday. Furthermore, the typical call duration at a time of day, which may be derived from the user history, can be used as a parameter indicative of the time. Finally, also typical call features used by the user per time of day can be used as parameters indicative of the time.

Examples of parameters indicative of location are for example the current location of the user or mobile device, the probable destination, the number of inter RAT changes during the last x minutes, which may be measured with or without network support, the number of cell changes during the last x minutes, which may be measured with or without network support, and/or the typical call features used per location.

The velocity of the user may be represented by parameters such as number of inter RAT changes during the last x minutes which may be measured with or without network support, the number of cell changes during the last x minutes which may be measured with or without network support and/or the expected RAT changes / bearer changes during call, which may be based on history data of the user.

Parameters indicative of the service duration are for example expected call duration, recent call duration history, typical call duration with contact, which may be derived from the history, typical call duration at time of day, which may be derived from the history, and/or the expected RAT changes / bearer changes during call, which may be based on history.

The contact with whom the communication connection and hence the service, in particular the call is to be established, may be considered by parameters such as the call party, the typical call duration with that contact, which can be derived from the history, and/or typical call features used with this contact, which may also be derived from the history.

As already mentioned in the above examples, the history of the user, in particular history data stored on the mobile device may be used. Examples of the history data may be recent non-voice communication history, call duration with certain contact, call features used during last calls, call features used per location, call features used per time of day, RAT changes / bearer changes during call.

In particular from the history of the user, preferably in combination with other parameters such as time parameters, a prediction can be made. Examples of predictions have already been mentioned above, for example the expected RAT changes.

Also available data rates and operator policies may be used as parameters for deciding on the Call Type to be used.

As already explained above, parameters used for the decision may comprise information indicative of the user behaviour, in particular of the current user situation, of the previous user behaviour, in particular as historic data of the user behaviour, or of expected user behaviour, in particular as predictions of user behaviour and/or information on the behaviour of other users of the communication network.

As has been shown above also combinations of indications of the user, the location, the time and so on may be used as a parameter for deciding on the Call Type.

According to one embodiment, part of the process of decision making is performed on a remote entity, in particular a network based or Internet based server. In this embodiment, for example comparing current user situation to historic data of the user or of a different user and deducing a prediction from this comparison, may be performed on the remote entity. Also other steps of the decision making may be performed on the remote entity. However, at least the step of triggering the establishment and preferably also the step of selecting the Call Type are made on the mobile device. The remote entity may also serve for storing history data from other users. In this embodiment, the processing of the stored history data of the other user may either be performed on the remote entity or on the mobile device. One advantage of performing at least part of the process of decision making on a remote entity is that the processing power requirements for the mobile device are lowered. The mobile device may for example merely have to receive the parameter of the requirements for the communication connection from the remote entity and may then only have to perform the steps of selecting the Call Type and triggering the establishment of the communication connection. In addition, if at least part of the decision making process is performed at the remote entity, information on other users, in particular historic data on the user behaviour of the other user can be easily obtained at such a remote entity and may thus be used for the decision making process.

According to one embodiment of the inventive method, the making of the decision on the Call Type to be used comprises weighting the values of the at least one parameter. The weighting may be performed based on entries which the user may make. In addition or alternatively, the weighting may be performed based on the user history. For example, the frequency of the occurrence of a parameter may determine its priority. If, for example, the user always has long conversations during his travel to work, that means at a specific time of the day and on work days, this parameter, in particular, the prediction that a long call will be established during his travel to work will have higher priority over a random history data which may have been gathered during his vacation.

According to one embodiment, the Call Type may be determined by calculating an overall score for the parameters, wherein a value is assigned to each parameter. The overall score (GPZ) may be calculated according to the following formula.

$$GPZ = \sum_{m=1}^{n} PZ_m = PZ_1 + PZ_2 + PZ_3 + ... + PZ_n$$

With

$$PZ_m = f_m(Parameter_m)$$

And consequently

$$GPZ = f_1(Parameter_1) + f_2(Parameter_2) + f_3(Parameter_3) + ... + f_n(Parameter_n)$$

For different values of the overall score (GPZ) different Call Types, preferably indicating RAT, bearer type as well as service, can be stored at the mobile device and upon calculation of the overall score may thus be selected.

According to a preferred embodiment, the mobile device establishes the communication connection with the Call Type which has been decided. As the communication connection is established by the mobile device and the mobile device also carries out at least part of the decision making process on the Call Type, it can be ensured in a simple fashion that the communication connection is established with this Call Type for the appropriate user. Most preferably, the step of triggering the establishing of the communication connection is carried out automatically at the mobile device.

According to a further aspect, the present invention relates to a mobile device for communication in a communication network comprising at least one decision unit in the mobile device for establishing a communication connection. The mobile device is characterized in that the decision unit is a unit for performing at least part of the process of decision making on the Call Type to be used for the communication connection, wherein the Call Type comprises the bearer type and the radio access technology to be used for the communication connection and wherein the decision is made based on at least one parameter, wherein at least one of the parameters relates to the user behaviour.

The decision unit may also be referred to as a control unit or controller. In the decision unit a set of rules may be stored to define the method of deciding on the Call Type. The decision unit may be part of or stored on a network communication chip of the mobile device, such as the 2G/3G/4G modem, the WiFi chip, the Ethernet controller. Alternatively, the decision unit may be in the user space platform of the mobile device, for example as part of the Android platform. If part of the deciding process is made on a remote entity, the decision unit at the mobile device may for example merely serve for transmitting the current user situation data to the remote entity, where further steps, in particular establishing of a prediction and the determination on the requirements is carried out and the decision unit at the mobile device will then only perform the final steps of selecting the Call Type and triggering the establishment of the communication connection. Also the step of selecting the Call Type may be performed at the remote entity. The remote entity may be a network based server, an Internet based server and/or a cloud based server.

By providing a decision unit at a mobile device, it will be possible to select the appropriate Call Type for a communication connection and hence a call to be set up by the mobile device. Providing the decision unit at the mobile device is advantageous as the required information for the decision, in particular information on the parameters will be available at the mobile device as they may for example be measured by the mobile device.

According to one embodiment, the mobile device comprises at least one storage unit for storing data on the user behaviour and the decision unit is connected to the storage unit. The data stored in the storage unit and relating to the user behaviour may also be referred to as user history data. In addition, to the user history data also additional information such as contact data of communication contacts may be stored in the storage unit. The storage unit may be a separate unit in the mobile device, it may however also be part of a storage unit which exists on the mobile device, such as an address book on the mobile device. According to a further embodiment, the decision unit of the mobile device has access to a remote entity, in particular a network based or Internet based server, for retrieving information on user behaviour of the user or of another user of the communication network. In this case, information on the user behaviour and other user information may be obtained from a cloud based server. This cloud based server for storing user information may also be used for carrying out at least part of the steps of the decision making process.

According to one embodiment, the mobile device comprises at least one measuring unit for measuring values of at least one parameter, in particular at least one condition, to be used for the decision. The measuring unit may for example be a unit for determining location data such as GPS data.

In addition or alternatively, the mobile device may have a detection unit for detecting availability of radio access networks and the detection unit may be connected to the decision unit. With this detection unit it will be possible to determine the availability of a certain RAT and to use this information as a parameter for deciding on the Call Type to be used for the communication connection.

According to one embodiment, the mobile device has a prediction unit for predicting the user behaviour, wherein the prediction unit is preferably connected to the decision unit or is part of the decision unit. The prediction unit may be connected to the storage unit to use user history data for making a prediction. For example, the user history data on the velocity of the user at a specific time of day may be used to make a prediction on expected RAT or bearer changes during the communication connection to be set up. In the embodiment, where part of the decision process is carried out at a remote entity, the prediction unit may be provided at that remote entity. In that case, the prediction unit may be connected to a storage unit at the remote entity and can preferably communicate with the decision unit at the mobile device.

The units of the mobile device may be implemented as hardware or software and may at least partially be combined. Also units which are provided on the remote entity for carrying out part of the decision making process may be implemented as hardware or software and may at least partially be combined.

The mobile device is preferably adapted or designed to carry out the inventive method.

According to a further aspect, the invention relates to a computer readable medium for a mobile device, having a program recorded thereon, wherein the program is designed to make the mobile device execute the inventive method. Furthermore the invention relates to a computer program product with a computer readable medium that can be read on a mobile device and that, when the program is loaded has at least one program means for carrying out the method according to anyone of claims. The computer program product may be loaded to the decision unit of the mobile device for carrying out the inventive method.

Features and advantages which are described for the inventive method are also applicable for the inventive mobile device, the inventive computer readable medium, the computer program product and respectively vice versa.

Advantages of the present invention will now be described again in detail. Different wireless access technologies combined with different transport bearers within and different types of services, in particular voice calls plus additional services create a complex matrix of Call Types. Depending on the mobility and call continuity requirements, user behaviour and other parameters, there is no optimal Call Type which is satisfying all scenarios at the same time but each call scenario has its optimal Call Type. So far no solution to this problem has been suggested. The present invention solves this problem within the limits of best demonstrated available technology in Radio Access Technology.

Currently there is no solution available to provide always the optimal choice of how to set up a wireless connection and maintain full feature support and full mobility at all times.

Full feature support (HD voice, video call, content sharing, supplementary call features and services) can be built in IP based access bearers with sufficient bandwidth and are therefore available only in WiFi, LTE and UMTS (HSPA) networks. A guaranteed service is only available in LTE networks as UMTS (HSPA) and WiFi do not provide a GBR bearer (Guaranteed Bit Rate) and may suffer from service degradations up to and including "no service" situations due to network congestion. There is typically no mobility support from WiFi networks to PLMN (public land mobile network) networks and no mobility support for IP calls from LTE / UMTS to GSM networks.

Full mobility support across all PLMN Radio Access Technologies (LTE, UMTS and GSM) can be provided by the means of SRVCC (Single Radio Voice Call Continuity) which converts a Voice over LTE call (IP based and therefore handled in the Packet Switched domain) into a Circuit Switched (CS) voice call in UMTS or GSM networks. However, video calls, content sharing and supplementary call features and services are discontinued at time of the handover as these cannot be supported in the Circuit Switched domain.

With the present invention, the maximal level of call-richness can provided with simultaneous highest possible call continuity, that means minimal number of call disconnections. For this purpose the user behaviour is considered when selecting the most suitable Call Type for the communication connection which is to be established. In a preferred embodiment, a prediction is made as to whether the user will need Handover (HO) during the connection. That means, a prediction is made as to whether the user will be static or mobile and/or whether the user will remain static or mobile. From this prediction the the most suitable combination of RAT and bearer type or service, respectively, can be deduced. The establishment of the prediction is preferably based on a decision algorithm which may use all or some of the following data for the calculation:

- current data on user behaviour determined by measuring
- data on user behaviour stored in a data base
- current system data / network data determined by measuring
- system data / network data stored in a data base

In contrast to known technologies for prioritising of RATs, the present invention uses a dynamic and user experience oriented approach, wherein the order of priority may divert from the normal 4G/3G/2G order. In addition, the present invention also considers which bearer type is to be selected or has been selected.

The core of the present invention is how to handle voice as a telephony service. In particular enriched calls, wherein data is transmitted with voice and wherein thus a change from voice calls to video calls is possible, are of major interest.

With the present invention, a decision on the service to be provided is preferably taken. This general decision preferably indicates whether a feature call or a mobility call is to be established. A feature call herein provides a number of call features but provides limited mobility due to the lack of handover capability. A mobility call in contrast is a call with limited call features but full mobility due to handover capability. Based on this decision und taking into account the available RATs, which results in a limited choice of bearers, the Call Type which is best suitable is selected.

RAT is an abbreviation for Radio Access Technology. The RATs which may be used are for example so called 2G Technologies such as GSM, 3G technologies such as UMTS, 4G technologies such as LTE, as well WiFi CDMA and other known Radio Access technologies.

WLAN - is a Wireless Local Area Network, for example as defined in IEEE 802.11 with no handover support. WWAN Wireless Wide Area Network, which is typically a PLMN based on 2G, 3G or 4G technology.

Examples of Call Types are VoLTE 3G/2G CS, WiFi PS, LTE/3G PS.

In order to ensure a good customer experience, according to the invention a rule-set for a piece of software that dynamically switches between access technologies and reroutes the data in accordance with the bearer's capabilities, is suggested. The decision unit which may be referred to as a software controller could reside either in the network communication chip (2G/3G/4G modem, WiFi chip, Ethernet controller, etc.) or in the user-space platform (as part of the Android platform or the likes) or in the application space of the device or at least partially in a remote entity, for example in the network infrastructure or as a cloud hosted entity.

This controller would expose the devices communication capabilities as abstracted objects, hiding away the complexity of bearers and hand-overs.

The technologies the present invention targets at are for example Voice Calls, in particular Circuit Switched or Packet Switched over the respective networks 2G, 3G or 4G or other networks such as WiFi.

In order to make an automated choice of the preferred Radio Access Technology and type of voice call (a. feature call - feature rich, but no or limited mobility and prone to service degradation in loaded cells or b. VoLTE/CS call - but plain voice service guaranteed across all access technologies, full mobility, but feature richness lost when loosing LTE coverage) it is desirable to predict end user behaviour and preferences based on a logic which is using a combination of some or all of the following criteria:

- is the user static or moving, i.e. what is the likelihood for the need of call handover to other access technologies. This can be done based on

    o user history data (e.g. always at home/ at work / at my favourite pub etc. at certain time of the day)

o location data (cell ID, GPS data

o historic data of call duration with particular calling parties (the longer the average calling time is, the higher the probability for the need of handovers)

o internal device measurements (with or without network support) to determine RF signal strength

o internal device measurements (with or without network support) to count the number of cell changes and/or RAT changes over the last x minutes.

- Has or will the user develop a need for rich call features (beyond plain voice service) and prefers a feature rich call at the expense of higher call drop rates. This can be done, based on:

o Feature use history with particular calling parties (e.g. I always do video calls with my wife, I never did a video call with my boss, etc.)

o Short term features use history (e.g. if I called 5 persons in the last 20 minutes and shared a photo with them, it is likely that the next call I immediately place needs to support photo sharing too)

o Location and time based features use history (e.g. when at home and connected to my home WiFi, I always do feature rich calls, rather than plain voice calls in the evening but not during the day when I am popping in and out of my WiFi coverage)

When evaluating the individual parameters the different parameters may be weighted differently. In this case subsets or groups within the parameter may be given different weight. For example, the time of day from 7am to 8am may have a higher value than the period from 8am to 4pm.

The general flow of a method according to the present invention can be summarized as follows:

A user initiates a call. The mobile device, in particular the decision unit, possibly in combination with units residing on a remote entity decides on the most suitable Call Type by considering for example the device status, the situational context, user data, user behaviour, device behaviour. Once the suitable Call Type has been determined, the mobile device initiates the call using the determined Call Type.

Figure 1 shows a schematic tree diagram of the method according to the present invention; and

Figure 2 shows a schematic tree diagram of an example of the method according to the present invention;

Figure 3 shows a schematic depiction of user behaviour;

Figure 4 shows a schematic view of the units of one embodiment of the mobile device according to the invention, and

Figure 5 shows the general usage of parameters in one embodiment of the method according to the invention.

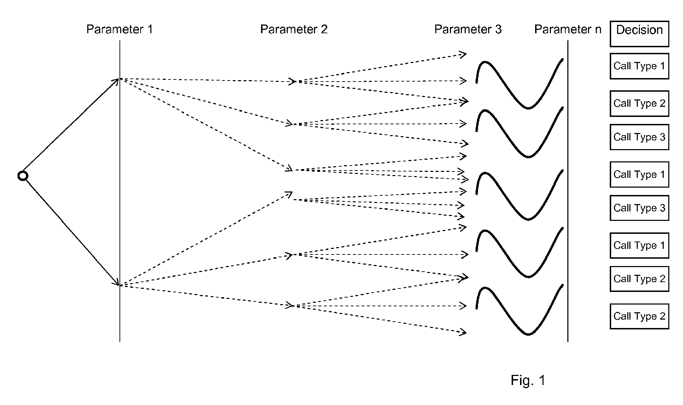

As can be derived from figure 1 several parameters will be considered in the decision on which Call Type is to be initiated.

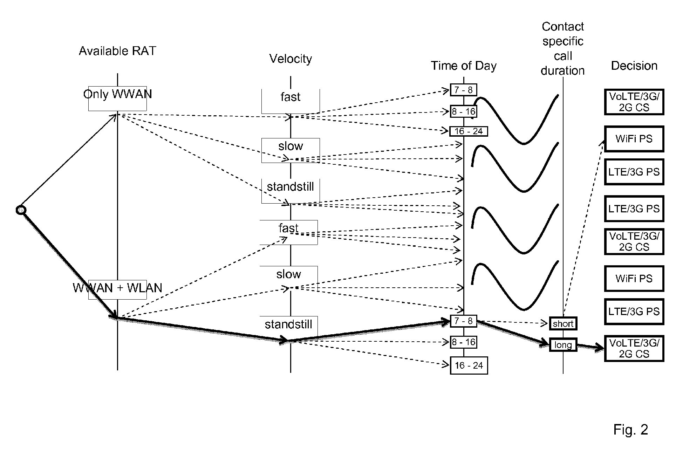

In Figure 2 the first parameter which is considered is the available RAT. In the depicted example, WWAN and WLAN are available. As a second parameter, the velocity at which the user and thus the mobile device moves is determined. In the example, it is detected that the user is at standstill. As a third parameter the time of day is determined, where in the example the time is between 7 and 8 in the morning. As a fourth parameter, the contact specific call duration is considered. In the depicted example, the duration of calls with the contact which is currently called, is normally long.

In view of these parameters, out of the possible or available Call Types, the Call Type VoLTE 3G/ 2G CS is selected.

One example of the method according to the present invention will now be described in detail.

If a user initiates a call by dialling a number of a contact in Hamburg, the mechanism may first analyse the current situation. The situation may for example be that the available RATs are 3G and WiFi, that the user is at home, that it is Tuesday 7:30am, that the device moves, but very slowly, that the last call with this phone number always happened while on the move, that means that handovers are required, and that the user is on the move on week days from 7:45am to 8:15am in 95% of all cases.

In order to guarantee the required call continuity, the mechanism initiates the call as 3G CS Voice Call.

One possible way to derive the most suitable Call Type is to assign a total score to each parameter.

It is considered that the number of parameters is n. For each parameter m (with m being 1....n) there is an allocation function $f_m$ defined. Per each parameter m and the corresponding function $f_m$ a score of points $PZ_m$ will either be calculated from certain input variables or be derived from a look up table. With n parameters, the total score GPZ is the sum of all scores $PZ_m$ with m = 1....n.

$$GPZ = \sum_{m=1}^{n} PZ_m = PZ_1 + PZ_2 + PZ_3 + ... + PZ_n$$

With

$$PZ_m = f_m(Parameter_m)$$

And consequently

$$GPZ = f_1(Parameter_1) + f_2(Parameter_2) + f_3(Parameter_3) + ... + f_n(Parameter_n)$$

In case of for example four different Call Types, the appropriate Call Type can be derived according to the following rules:

Call Type 1 for GPZ < x score points
Call Type 2 for GPZ from x to y score points
Call Type 3 for GPZ from y+1 to z score points
Call Type 4 for GPZ > z score points

Herein $PZ_m$ and GPZ may also be negative values.

Parameters which could be used for making the decision according to the present invention are for example:

Number and Types of available RAT(s)
Home WiFi/3<sup>rd</sup> party WiFi
Time of day
Weekday / weekend
Public Holiday
Location
Velocity
Expected call duration
Recent call duration history
Recent non-voice communication history
Call party
Probable destination
Data rates on available bearer
Device measurements with and without network support to determine RF signal strength
Number of inter RAT changes during the last x minutes (measurement with or without network support)
Number of cell changes during the last x minutes (measurement with or without network support)
Operator Policies

Also combinations of these parameters can be used as a parameter like for instance:

Typical call duration with contact (history)
Typical call duration at time of day (history)
Typical call features used with contact (history)
Typical call features used during last calls (history)
Typical call features used per location
Typical call features used per time of day
Expected RAT changes / bearer changes during call (based on history)

In one example Available RAT (Parameter 1 with the $f_1(Avalaibel\_RAT)$), Velocity (Parameter 2 with the function $f_2(velocity)$), Time of Day (Parameter 3 with the $f_3(Time\_of\_Day)$) and Typical Call Duration_w/Contact (Parameter n with the $f_n(typica\_Call\_Duration\_w/Contact)$), may be used as parameters for making the decision. It should be noted that more parameters may be used.

Example values for these parameters are shown in the following tables:

| Available RAT | |
|---|---|
| $x$ | $f_1(x)$ |
| WWAN | 100 |
| WWAN + WLAN | -1000 |

| Velocity | |
|---|---|
| x | $f_1(x)$ |
| Fast | 1000 |
| Slow | 100 |
| Stand still | 50 |

| Time of Day | |
|---|---|
| $x$ | $f_1(x)$ |
| .<br>.<br>. | ... |
| 7-8 | 900 |
| 8-16 | 0 |
| 16-18 | 900 |
| 18-24 | 0 |

| Typical Duration_w/Contact | |
|---|---|
| x | $f_1(x)$ |
| Short-term | 0 |
| Long-term | 700 |

For a case where WWAN + WLAN is available, the user is at standstill, it is between 7 and 8am in the morning and the typical call duration with the called party, i.e. contact is long term, the overall point score GPZ may thus be calculated as:

$$GPZ = (-1000) + 50 + 900 + 700 = 650$$

The Call Types may for example be set to be

| GPZ | <0 | 0 - 500 | > 500 |
|---|---|---|---|
| Call Type | WiFi PS | LTE /3G PS | VoLTE / 3G/2G CS |

For the present example and taking into consideration the above mentioned parameters, a VoLTE 3G/2G CS call would be selected. With this Call Type, the most call features can be provided and at the same time the highest mobility is available.

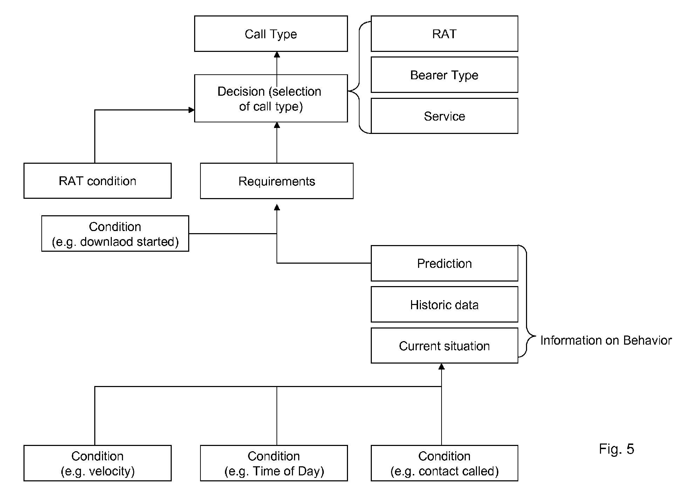

The usage of parameters according to one embodiment of the method according to the present invention is schematically shown in Figure 5.

Parameters, which may be referred to as conditions such as the velocity of the user, the time of day, the contact to be called, may be used to generate a situation fingerprint. This fingerprint, is the current user situation and thus represents information on the user behaviour. This current user situation may be compared against historic data of the user or a different user and a prediction on the user behaviour may be established. This prediction may be used to determine the requirements in terms of mobility and call features which might be needed. In addition, further conditions, for example, whether a download had been started from the mobile device, may be considered. This condition may be considered before determining the requirements or after determining the requirements. Based on the requirements and on the RAT condition, e.g. which RATs are available, the Call Type, including the RAT, Bearer type and possibly the service to be used, is selected. The establishing of the communication connection with this Call Type is then triggered.

The chart shown in Figure 5 is only an example, different parameters may be used and a different order of steps may be performed.

In the embodiment shown in Figure 5, the calculation of the total score as described above, might include the generation of the information on the current user behaviour and by means of assigning the respective values to the parameters, the comparison to historic data as well as the prediction may be carried out. The total score and the values against which it is compared to determine the Call Type in the calculation, may represent the steps of determining the requirements and selecting the Call Type.

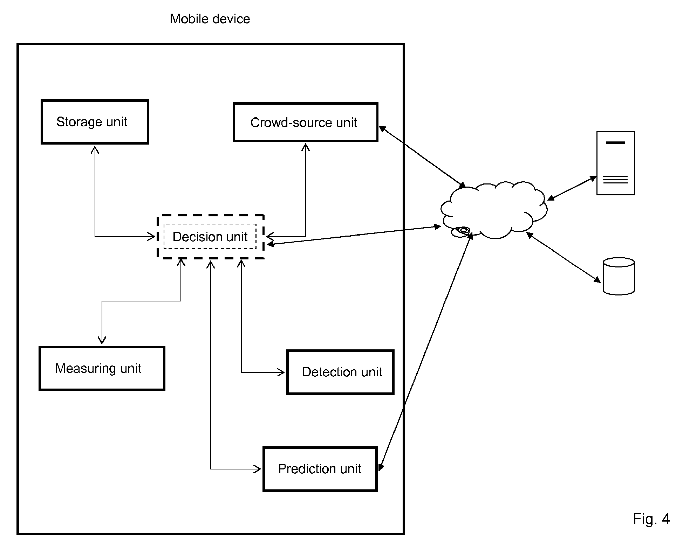

In Figure 4 a schematic view of a mobile device according to one embodiment of the invention is shown. In the depicted embodiment, the mobile device comprises a storage unit, a measuring unit, a prediction unit, a detection unit, a decision unit and a crowd-source unit. The units are shown as separate units but may be at least partially combined. In Figure 4 also remote entities are depicted as a remote server and a remote database. The database may be included in the remote server. The mobile device can transmit and receive data from the remote entities. This transmission may for example be carried out via the crowd-source unit of the mobile device. The transmission and receiving may however also be performed by the decision unit of the mobile device directly, so that the crowd-source unit can be omitted. The embodiment of a mobile device shown in Figure 4 is an example of a mobile device with which a crowd-sourced processing as part of the decision process as well as usage of crowd-sourced data such as historic data from other users can be used in the deciding process according to the invention.

**Claims**

1. Method of establishing a communication connection from a mobile device in a communication network, **characterized in that** before establishing the communication connection a decision on a Call Type to be used for the communication connection is made, wherein the decision is at least partially made on the mobile device, wherein the Call Type comprises the bearer type and the radio access technology to be used for the communication connection, wherein the decision is made based on at least one parameter and wherein at least one of the parameters relates to the user behaviour.

2. Method according to claim 1, **characterized in that** the Call Type comprises the service to be rendered.

3. Method according to anyone of claims 1 or 2, **characterized in that** at least one of the parameters to be used for making the decision on the Call Type to be used is a prediction, preferably derived based on user history data.

4. Method according to anyone of claims 1 to 3, **characterized in that** one parameter is a requirement for mobility of the communication connection and/or a requirement for features in the communication connection, which are preferably derived from the at least one other parameter.

5. Method according to anyone of claims 1 to 5, **characterized in that** the parameters comprise conditions indicative of available radio access network(s), service features, time, location, velocity of the user, service duration, contact, available data rates, operator policies and/or any combination of such indications and/or the parameters comprise information indicative of the user behaviour, in particular of the current user situation, information indicative of the previous user behaviour, in particular as historic data of the user behaviour, or information indicative of expected user behaviour, in particular as predictions of user behaviour and/or information on the behaviour of other users of the communication network.

6. Method according to anyone of claims 1 to 5, **characterized in that** part of the process of decision making is performed on a remote entity, in particular a network based or Internet based server.

7. Method according to anyone of claims 1 to 6, **characterized in that** the making of the decision on the Call Type to be used comprises weighting the values of the at least one parameter.

8. Method according to anyone of claims 1 to 7, **characterized in that** the mobile device establishes the communication connection with the Call Type which has been decided.

9. Mobile device for communication in a communication network comprising at least one decision unit in the mobile device for establishing a communication connection, **characterized in that** the decision unit is a unit for performing at least part of the process of decision making on the Call Type to be used for the communication connection, wherein the Call Type comprises the bearer type and the radio access technology to be used for the communication connection and wherein the decision is made based on at least one parameter, wherein at least one of the parameters relates to the user behaviour.

10. Mobile device according to claim 9, **characterized in that** the mobile device comprises at least one storage unit for storing information on the user behaviour and the decision unit is connected to the storage unit or **in that** the decision unit of the mobile device has access to a remote entity, in particular a network based or Internet based server, for retrieving information on user behaviour of the user or of another user of the communication network.

11. Mobile device according to anyone of claims 9 or 10, **characterized in that** the mobile device comprises at least one measuring unit for measuring values of at least parameter, in particular of at least one condition, to be used for the decision.

12. Mobile device according to anyone of claims 9 to 11, **characterized in that** the mobile device has a detection unit for detecting availability of radio access networks and that the detection unit is connected to the decision unit.

13. Mobile device according to anyone of claims 9 to 12, **characterized in that** the mobile device has a prediction unit for predicting the user behaviour, wherein the prediction unit is preferably connected to the decision unit or is part of the decision unit.

14. Mobile device according to anyone claims 9 to 13, **characterized in that** the mobile device is adapted to carry out a method according to anyone of claims 1 to 8.

15. Computer readable medium for a mobile device, having a program recorded thereon, wherein the program is designed to make the mobile device execute the method of one of the claims 1 to 8.

16. Computer program product with a computer readable medium that can be read on a mobile device and that, when the program is loaded has at least one program means for carrying out the method according to anyone of claims 1 to 8.

Fig. 1

Fig. 2

Current user
behaviour
(User and
device status)

User Behaviour

User
historic
data

✛

Crowd-sourced
historic data

Expected user
behaviour
(Prediction)

Fig. 3

Mobile device

Fig. 4

Fig. 5

Europäisches
Patentamt

European
Patent Office

Office européen
des brevets

# EUROPEAN SEARCH REPORT

Application Number

EP 14 15 3506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2004/162109 A1 (SHIMODA SHINICHI [JP] ET AL) 19 August 2004 (2004-08-19)<br>* abstract *<br>* paragraphs [0003], [0005] - [0008], [0025], [0027] - [0030], [0032] - [0035] * | 1-16 | INV.<br>H04W76/02<br><br>ADD.<br>H04W4/02<br>H04W48/18<br>H04W72/02<br>H04W88/06 |
| X | WO 03/096559 A1 (AVAYA TECHNOLOGY CORP [US]; SELIGMANN DOREE DUNCAN [US]) 20 November 2003 (2003-11-20)<br>* abstract *<br>* paragraphs [0003], [0007], [0008], [0020] - [0037], [0048] * | 1-16 | |
| X | US 5 987 319 A (HERMANSSON HANS [SE] ET AL) 16 November 1999 (1999-11-16)<br>* abstract; figure 1 *<br>* column 1, line 59 - column 7, line 2 * | 1-16 | |
| X | WO 2006/137779 A1 (TELIASONERA AB [SE]; ERNSTROEM PER [SE]) 28 December 2006 (2006-12-28)<br>* abstract *<br>* page 1, line 28 - page 10, line 23 * | 1-16 | TECHNICAL FIELDS<br>SEARCHED (IPC)<br><br>H04W |
| X | EP 0 701 382 A1 (AT & T CORP [US]) 13 March 1996 (1996-03-13)<br>* abstract *<br>* claims 1-13 * | 1-16 | |
| A | US 2011/164530 A1 (KRISHNASWAMY DILIP [US] ET AL) 7 July 2011 (2011-07-07)<br>* abstract *<br>* paragraphs [0005], [0007], [0044], [0073] * | 1-16 | |

-/--

The present search report has been drawn up for all claims

| Place of search | Date of completion of the search | Examiner |
|---|---|---|
| Berlin | 8 July 2014 | Englund, Terese |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

**EUROPEAN SEARCH REPORT**

Application Number

EP 14 15 3506

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | WO 2013/022392 A1 (ERICSSON TELEFON AB L M [SE]; DIMOU KONSTANTINOS [SE]; MUELLER WALTER) 14 February 2013 (2013-02-14)<br>* abstract *<br>* paragraphs [0001], [0002], [0009], [0028], [0029], [0030], [0033], [0034], [0038] - [0043], [0050], [0051] * | 1-16 | |
| A | US 2011/306364 A1 (GOSSAIN HRISHIKESH [US] ET AL) 15 December 2011 (2011-12-15)<br>* abstract *<br>* paragraphs [0002], [0004], [0027] - [0031], [0038] - [0076] * | 1-16 | |
| A | US 2013/016682 A1 (RUSSELL JESSE E [US]) 17 January 2013 (2013-01-17)<br>* paragraphs [0035] - [0036], [0063] - [0068], [0070], [0071] * | 1-16 | |

TECHNICAL FIELDS
SEARCHED (IPC)

The present search report has been drawn up for all claims

| Place of search | Date of completion of the search | Examiner |
|---|---|---|
| Berlin | 8 July 2014 | Englund, Terese |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 14 15 3506

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2014

| Patent document cited in search report | | Publication date | Patent family member(s) | | Publication date |
|---|---|---|---|---|---|
| US 2004162109 | A1 | 19-08-2004 | CN | 1476222 A | 18-02-2004 |
| | | | JP | 3937968 B2 | 27-06-2007 |
| | | | JP | 2004072136 A | 04-03-2004 |
| | | | KR | 20040012562 A | 11-02-2004 |
| | | | US | 2004162109 A1 | 19-08-2004 |
| WO 03096559 | A1 | 20-11-2003 | US | 2004066932 A1 | 08-04-2004 |
| | | | US | 2004185838 A1 | 23-09-2004 |
| | | | WO | 03096559 A1 | 20-11-2003 |
| US 5987319 | A | 16-11-1999 | AU | 720308 B2 | 25-05-2000 |
| | | | AU | 721688 B2 | 13-07-2000 |
| | | | AU | 2717597 A | 19-11-1997 |
| | | | AU | 2717697 A | 19-11-1997 |
| | | | AU | 2717797 A | 19-11-1997 |
| | | | AU | 2717897 A | 19-11-1997 |
| | | | CA | 2252693 A1 | 06-11-1997 |
| | | | CN | 1216652 A | 12-05-1999 |
| | | | DE | 19781710 B3 | 07-03-2013 |
| | | | DE | 19781710 T1 | 29-04-1999 |
| | | | DE | 19781715 T1 | 29-04-1999 |
| | | | DE | 69717443 D1 | 09-01-2003 |
| | | | EP | 0907950 A1 | 14-04-1999 |
| | | | FI | 982316 A | 26-10-1998 |
| | | | FI | 982317 A | 26-10-1998 |
| | | | FI | 982318 A | 26-10-1998 |
| | | | KR | 100359979 B1 | 07-02-2003 |
| | | | MY | 119786 A | 29-07-2005 |
| | | | MY | 120116 A | 30-09-2005 |
| | | | MY | 126392 A | 29-09-2006 |
| | | | TW | 389014 B | 01-05-2000 |
| | | | US | 5982766 A | 09-11-1999 |
| | | | US | 5987319 A | 16-11-1999 |
| | | | US | 6163577 A | 19-12-2000 |
| | | | US | 6195337 B1 | 27-02-2001 |
| | | | WO | 9741549 A1 | 06-11-1997 |
| | | | WO | 9741641 A2 | 06-11-1997 |
| | | | WO | 9741662 A1 | 06-11-1997 |
| | | | WO | 9741663 A1 | 06-11-1997 |
| WO 2006137779 | A1 | 28-12-2006 | EP | 1897390 A1 | 12-03-2008 |
| | | | EP | 2493243 A2 | 29-08-2012 |
| | | | EP | 2493244 A2 | 29-08-2012 |
| | | | EP | 2493245 A2 | 29-08-2012 |
| | | | SE | 0501411 A | 21-12-2006 |
| | | | WO | 2006137779 A1 | 28-12-2006 |

EPO FORM P0459

For more details about this annex : see Official Journal of the European Patent Office, No. 12/82

## ANNEX TO THE EUROPEAN SEARCH REPORT
## ON EUROPEAN PATENT APPLICATION NO.

EP 14 15 3506

This annex lists the patent family members relating to the patent documents cited in the above-mentioned European search report.
The members are as contained in the European Patent Office EDP file on
The European Patent Office is in no way liable for these particulars which are merely given for the purpose of information.

08-07-2014

| Patent document cited in search report | | Publication date | Patent family member(s) | | Publication date |
|---|---|---|---|---|---|
| EP 0701382 | A1 | 13-03-1996 | DE | 69533867 D1 | 27-01-2005 |
| | | | DE | 69533867 T2 | 29-12-2005 |
| | | | EP | 0701382 A1 | 13-03-1996 |
| | | | JP | 3693716 B2 | 07-09-2005 |
| | | | JP | H08116568 A | 07-05-1996 |
| | | | US | 5623535 A | 22-04-1997 |
| US 2011164530 | A1 | 07-07-2011 | CN | 102696245 A | 26-09-2012 |
| | | | EP | 2522158 A1 | 14-11-2012 |
| | | | JP | 2013516705 A | 13-05-2013 |
| | | | KR | 20120112760 A | 11-10-2012 |
| | | | TW | 201143494 A | 01-12-2011 |
| | | | US | 2011164530 A1 | 07-07-2011 |
| | | | WO | 2011085037 A1 | 14-07-2011 |
| WO 2013022392 | A1 | 14-02-2013 | CN | 103703858 A | 02-04-2014 |
| | | | EP | 2742766 A1 | 18-06-2014 |
| | | | US | 2014160976 A1 | 12-06-2014 |
| | | | WO | 2013022392 A1 | 14-02-2013 |
| US 2011306364 | A1 | 15-12-2011 | JP | 2013532443 A | 15-08-2013 |
| | | | KR | 20130093008 A | 21-08-2013 |
| | | | US | 2011306364 A1 | 15-12-2011 |
| | | | US | 2013150033 A1 | 13-06-2013 |
| | | | WO | 2011159776 A1 | 22-12-2011 |
| US 2013016682 | A1 | 17-01-2013 | NONE | | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20120322446 A1